# EUROPEAN PATENT APPLICATION

(11) **EP 4 787 833 A1**
(43) Date of publication of application: **05.08.2026**
(21) Application number: 24889002.2
(22) Date of filing: 27.10.2024
(51) Int. Cl.: H04N 13/305, G02B 30/27

(54) **DISPLAY MODULE, ELECTRONIC DEVICE, AND CONTROL METHOD OF ELECTRONIC DEVICE**

(30) Priority: 06.11.2023 KR 20230151825
(71) Applicant: Samsung Electronics Co., Ltd., Suwon-si, Gyeonggi-do 16677 (KR)
(72) Inventor: SHIN, Bongsu, Suwon-si Gyeonggi-do 16677 (KR); LEE, Changkun, Suwon-si Gyeonggi-do 16677 (KR)
(74) Representative: Gulde & Partner
(86) International application number: PCT/KR2024/016488
(87) International publication number: WO 2025/100813

(57) **Abstract**

Disclosed are a display module, an electronic device, and a control method of the electronic device. Specifically, the display module includes: a light emitter which emits light corresponding to image data through a plurality of pixels; and a plurality of lens sheets each including a plurality of gradient index (GRIN) lenses which operate as a convex lens or a concave lens on the basis of different refractive indices dependent on the position in the lens, wherein the plurality of GRIN lenses each include a plurality of first lenses operating as convex lenses and a plurality of second lenses operating as concave lenses, the plurality of first lenses and he plurality of second lenses are alternatively disposed in the plurality of lens sheets, and while light for providing a three-dimensional image is being emitted from the light emitter, the plurality of first lenses included in a first lens sheet among the plurality of lens sheets may be disposed above the plurality of first lenses included in a second lens sheet among the plurality of lens sheets.

## Description

### [Technical Field]

The disclosure relates to a display module, an electronic apparatus, and a control method of an electronic apparatus, and more particularly to a display module capable of providing a 3-dimensional image, an electronic apparatus that includes the display module, and a control method thereof.

### [Background Art]

Recently, technology for providing 3-dimensional images are being developed, and in particular, recent developments in technology allowing for 3-dimensional images to be provided to all even without auxiliary equipment such as 3D glasses are being accelerated.

As prior art for providing an autostereoscopic 3-dimensional image, there are prior art that use a lenticular lens, but the prior art described above has a limitation of providing a 3-dimensional image having a wide field-of-view being difficult.

Specifically, in order to expand the field-of-view of the 3-dimensional image provided through the lenticular lens, a lenticular lens with a high refractive index or a high has to be used, but there is a problem of implementing a lenticular lens of less than or equal to several millimeters required in the field being difficult using materials that have a high refractive index, and if the curvature is increased, it could lead to a problem of crosstalk according to an overlap between sub-image views for providing the 3-dimensional image increasing.

Meanwhile, although there is prior art for reducing focal length and expanding the field-of-view using a lens sheet stacked with two or more lenticular lenses, there is a problem with such prior art in that thickness of the lens sheet becomes thicker, and that an arrangement between each lens sheet and pixels may be difficult when two or more lenticular lenses with a curvature are stacked.

In addition, the prior art that uses the lenticular lens may only provide a 3-dimensional image, and a limitation of it being difficult to apply to a 2D/3D switching display that can provide both a 3-dimensional image and a 2-dimensional image has been pointed out.

### [Disclosure]

### [Technical Solution]

The disclosure is for overcoming the problems of prior art as described above, and an object of the disclosure is in providing a display module capable of providing a 3-dimensional image with a wide field-of-view, an electronic apparatus including the display module, and a control method thereof.

According to one or more embodiments for achieving the object as described above, a display module includes a light emitting part that emits light corresponding to image data through a plurality of pixels, and a plurality of lens sheets including a plurality of gradient-index (GRIN) lenses, respectively, that operate as a convex lens or a concave lens based on different refractive indices according to a position in a lens, and the plurality of GRIN lenses includes a plurality of first lenses operating as a convex lens and a plurality of second lenses operating as a concave lens, respectively, the plurality of first lenses and the plurality of second lenses are alternately disposed within the plurality of lens sheets, and the plurality of first lenses included in a first lens sheet among the plurality of lens sheets is disposed at an upper portion of the plurality of first lenses included in a second lens sheet among the plurality of lens sheets while light for providing a 3-dimensional image is being emitted from the light emitting part.

Meanwhile, the plurality of first lenses included in the first lens sheet may be disposed at an upper portion of the plurality of second lenses included in the second lens sheet while light for providing a 2-dimensional image is being emitted from the light emitting part.

Meanwhile, the plurality of GRIN lenses may have a plane shape, and the first lens sheet may be stacked at an upper portion of the second lens sheet.

Meanwhile, the plurality of second lenses included in the first lens sheet may be disposed at an upper portion of the plurality of second lenses included in the second lens sheet, and driving of pixels corresponding to the plurality of second lenses among the plurality of pixels may be stopped.

Meanwhile, a compensation layer and a plurality of electrode pairs disposed in pairs at an area corresponding to a position of a plurality of first lenses when light corresponding to a 3-dimensional image is emitted through the light emitting part among an area of an upper portion and a lower portion of the compensation layer may be further included, and an area corresponding to a position of the plurality of second lenses in the compensation layer may be changed to a convex lens shape as intervals between the plurality of electrode pairs are narrowed when a pre-set voltage is applied to the plurality of electrode pairs.

Meanwhile, the compensation layer may be an electroactive polymer (EAP), and the compensation layer and the plurality of electrode pairs may be transparent.

Meanwhile, optical power of the area changed to the convex lens shape may be 4 times of optical power of each of the plurality of first lenses.

According to one or more embodiments for achieving the object as described above, an electronic apparatus includes a display module, memory storing at least one instruction, and a processor configured to execute the at least one instruction, and the display module includes a light emitting part that emits light corresponding to image data through a plurality of pixels, and a plurality of lens sheets including a plurality of gradient-index (GRIN) lenses, respectively, that operate as a convex lens or a concave lens based on different refractive indices according to a position in a lens, and the plurality of GRIN lenses include a plurality of first lenses operating as a convex lens and a plurality of second lenses operating as a concave lens, respectively, the plurality of first lenses and the plurality of second lenses are alternately disposed within the plurality of lens sheets, and the plurality of first lenses included in a first lens sheet among the plurality of lens sheets is disposed at an upper portion of the plurality of first lenses included in a second lens sheet among the plurality of lens sheets while light for providing a 3-dimensional image is being emitted from the light emitting part.

Meanwhile, a driving part that moves at least one among the plurality of lens sheets to a horizontal direction may be further included, and the processor may be configured to control, based on a request for providing an image in 3-dimensions being received, the driving part for the plurality of first lenses included in the first lens sheet to be disposed at an upper portion of the plurality of first lenses included in the second lens sheet and control the light emitting part for light corresponding to a 3-dimensional image to be emitted, and control, based on a request for providing an image in 2-dimensions being received, the driving part for the plurality of first lenses included in the first lens sheet to be disposed at an upper portion of the plurality of second lenses included in the second lens sheet, and control the light emitting part for light corresponding to a 2-dimensional image to be emitted.

Meanwhile, the driving part may include at least one among a piezo actuator, an ultrasonic motor (USM), and a shape memory actuator (SMA).

Meanwhile, the plurality of first lenses included in the first lens sheet is disposed at an upper portion of the plurality of second lenses included in the second lens sheet while light for providing a 2-dimensional image is being emitted from the light emitting part.

Meanwhile, the plurality of GRIN lenses may have a plane shape, and the first lens sheet may be stacked at an upper portion of the second lens sheet.

Meanwhile, the plurality of second lenses included in the first lens sheet may be disposed at an upper portion of the plurality of second lenses included in the second lens sheet, and driving of pixels corresponding to the plurality of second lenses among the plurality of pixels may be stopped.

Meanwhile, the display module may further include a compensation layer and a plurality of electrode pairs disposed in pairs at an area corresponding to a position of a plurality of first lenses when light corresponding to a 3-dimensional image is emitted through the light emitting part among an area of an upper portion and a lower portion of the compensation layer, and the processor may be configured to control the plurality of electrode pairs for a pre-set voltage to be applied to the plurality of electrode pairs when a request for providing an image in 3-dimensions is received, and an area corresponding to a position of the plurality of second lenses in the compensation layer may be changed to a convex lens shape as intervals between the plurality of electrode pairs are narrowed when a pre-set voltage is applied to the plurality of electrode pairs.

Meanwhile, the compensation layer may be an electroactive polymer (EAP), and the compensation layer and the plurality of electrode pairs may be transparent.

### [Description of Drawings]

FIG. 1 and FIG. 2 are diagrams illustrating a configuration of a display module according to one or more embodiments of the disclosure;
FIG. 3 is a diagram illustrating one or more embodiments associated with stopping driving of pixels corresponding to a plurality of second lenses of the disclosure;
FIG. 4 is a diagram illustrating an operation of a compensation layer and a plurality of electrodes when providing a 3-dimensional image;
FIG. 5 is a diagram illustrating an optical power change when a shape of a compensation layer is changed;
FIG. 6 is a diagram illustrating an operation of a compensation layer and a plurality of electrodes when providing a 2-dimensional image;
FIG. 7 is a block diagram briefly illustrating a configuration of an electronic apparatus according to one or more embodiments of the disclosure;
FIG. 8 is a block diagram illustrating in detail a configuration of an electronic apparatus according to one or more embodiments of the disclosure; and
FIG. 9 is a flowchart illustrating a control method of an electronic apparatus according to one or more embodiments of the disclosure.

### [Mode for Invention]

Various modifications may be made to the embodiments of the disclosure, and there may be various types of embodiments. Accordingly, specific embodiments will be illustrated in drawings, and described in detail in the detailed description. However, it should be noted that the various embodiments are not for limiting the scope of the disclosure to a specific embodiment, but they should be interpreted to include all modifications, equivalents or alternatives of the embodiments included herein. With respect to the description of the drawings, like reference numerals may be used to indicate like elements.

In describing the disclosure, in case it is determined that the detailed description of related known technologies or configurations may unnecessarily confuse the gist of the disclosure, the detailed description thereof will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used in the disclosure have been merely used to describe a specific embodiment, and is not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not limit the relevant element.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

Conversely, when the certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a processor configured to (or set up to) perform A, B, and C" may mean a dedicated processor (e.g., embedded processor) for performing a relevant operation, or a generic-purpose processor (e.g., central processing unit (CPU) or application processor) capable of performing the relevant operations by executing one or more software programs stored in a memory apparatus.

The term 'module' or 'part' used in one or more embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, the various elements and areas in the drawings have been schematically illustrated. Accordingly, the technical spirit of the disclosure is not limited by relative sizes and distances illustrated in the accompanied drawings.

An embodiment of the disclosure will be described in detail below with reference to the accompanied drawings to aid in the understanding of those of ordinary skill in the art.

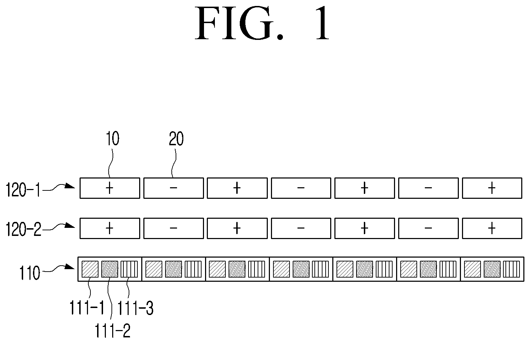

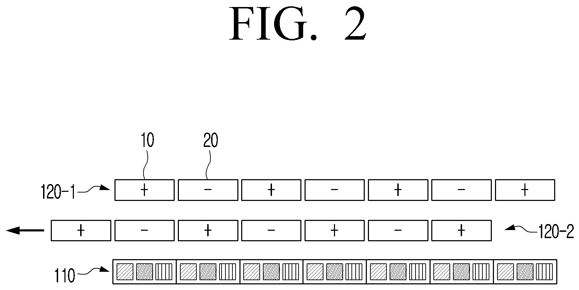

FIG. 1 and FIG. 2 are diagrams illustrating a configuration of a display module 100 according to one or more embodiments of the disclosure.

The 'display module 100' according to the disclosure may refer to an apparatus (or configuration) capable of displaying an image, and may be substituted with terms such as a 'display panel' and the like. Specifically, the display module 100 may be an apparatus capable of providing both a 3-dimensional image and a 2-dimensional image even without auxiliary equipment such as 3D glasses, and may be referred to as a 2D/3D switching(or switchable) display, a 2-dimensional/3- dimensional image compatible display, or the like.

The display module 100 may mean an entire display with which an image can be displayed, and may mean a portion of an entire display. In other words, a plurality of display modules 100 may be combined with one another and configure one display.

Meanwhile, an 'electronic apparatus 1000' to which the display module 100 according to the disclosure is applied may refer to an apparatus that includes the display module 100. For example, the electronic apparatus 1000 may be implemented as a TV, a smartphone, a tablet PC, a smartwatch, a virtual reality (VR) apparatus, an augmented reality (AR) apparatus, and the like, but it is to be noted that there are no specific limitations to types of the electronic apparatus 1000.

The display module 100 according to the disclosure will be described first below and then the electronic apparatus 1000 including the display module 100 will be described.

As shown in FIG. 1 and FIG. 2, the display module 100 according to the disclosure may include a light emitting part 110 and a plurality of lens sheets 120.

The 'light emitting part 110' may emit light corresponding to image data. Specifically, the light emitting part 110 may emit light corresponding to a 3-dimensional or a 2-dimensional image. Here, the term 'emit' may be substituted with terms such as 'radiate'. Specifically, the light emitting part 110 may include a plurality of pixels, and a light source corresponding to the plurality of pixels.

Each of the plurality of pixels may include a plurality of sub pixels, and when each of the plurality of pixels include the plurality of sub pixels, the light emitting part 110 may emit light corresponding to image data through each of the plurality of sub pixels. Each of the plurality of sub pixels may correspond to a plurality of LEDs, but is not limited thereto.

For example, as shown in FIG. 1, each of the plurality of sub pixels may include a first sub pixel 111-1 that emits red light, a second sub pixel 111-2 that emits green light, and a third sub pixel 111-3 that emits blue light, and a set of the first sub pixel 111-1, the second sub pixel 111-2, and the third sub pixel 111-3 may constitute each of the plurality of pixels. The first sub pixel, the second sub pixel, and the third sub pixel may be respectively substituted with terms such as an R sub pixel, a G sub pixel, and a B sub pixel. In FIG. 1, although reference numerals have been indicated for only three sub pixels, it will be made clear in light of FIG. 1 that that other pixels may also include the R sub pixel, the G sub pixel, and the B sub pixel.

Meanwhile, in a broad sense, the light emitting part 100 may include circuitry for controlling driving of a light source and electrodes. For example, the light source of the light emitting part 110 may be implemented with a plurality of LEDs, but is not limited thereto. The term 'light emitting part 110' may be substituted with terms such as an 'image display part', a 'display panel', a 'light output part', or the like.

The 'plurality of lens sheets 120' may refer to a lens array including a plurality of lenses. As shown in FIG. 1 and FIG. 2, the plurality of lens sheets 120 may have a plane shape, and accordingly, the term 'lens sheet' may be substituted with terms such as a 'lens layer'. Specifically, the plurality of lens sheets 120 may respectively include a plurality of gradient-index (GRIN) lenses that operate as a convex lens or a concave lens based on different refractive indices according to a position in the lens.

The 'GRIN lens' may refer to a lens having characteristics of a refractive index changing spatially. Specifically, the GRIN lens may have a distribution in which the refractive index incrementally changes along a center axis, and accordingly change a path of incident light according to a position. For example, the GRIN lens may refract light at a greater angle from a position at which the refractive index is high, and refract light at a smaller angle from a position at which the refractive index is low. In addition to the GRIN lens, other lenses that are capable of spatially changing the refractive index of the lens may be applied to the disclosure.

The plurality of GRIN lenses may include each of a plurality of first lenses 10 and a plurality of second lenses 20. In the disclosure, the 'first lens 10' may refer to a lens that operates as a convex lens, and the 'second lens 20' may refer to a lens that operates as a concave lens.

The 'convex lens' may be a lens that has a curved surface facing outwards from the center, and light passing the center of the convex lens may be refracted from the curved surface of the lens and gathered at a focal point of the lens. The 'concave lens' may be a lens that has a curved surface facing inwards from the center, and light passing the center of the concave lens may be refracted from the curved surface of the lens and spread out therefrom. The convex lens may be used in enlarging of an image, and the concave lens may be used in reducing of an image.

However, the first lens 10 and the second lens 20 operating respectively as a convex lens and a concave lens may not mean that the first lens 10 has a convex shape or that the second lens 20 has a concave shape, and the first lens 10 and the second lens 20 may operate as a convex lens and a concave lens based on different refractive indices according to their respective positions in the lens.

Specifically, a refractive index of the first lens 10 may decrease from a center part of the first lens 10 toward an outer side thereof and accordingly, the first lens 10 may operate as the convex lens. Conversely, a refractive index of the second lens 20 may increase from a center part of the second lens 20 towards an outer side thereof and accordingly, the second lens 20 may operate as the concave lens. In FIG. 1 and FIG. 2, a + symbol has been designated to a configuration indicating the first lens 10, and a - symbol has been designated to a configuration indicating the second lens 20.

In FIG. 1, reference numbers 10 and 20 have been specified for only one first lens 10 and one second lens 20, but configurations designated with the + symbol may indicate the first lens 10 and configurations designated with the - symbol may indicate the second lens 20. Meanwhile, a number of a plurality of lenses and a number of a plurality of pixels shown in FIG. 1 have merely been simplified for convenience of description, and there is no particular limitation to the number of the plurality of lenses and the number of the plurality of pixels according to the disclosure. The indication method of FIG. 1 is likewise applied to FIG. 2, FIG. 3, FIG. 4, and FIG. 6.

As shown in FIG. 1 and FIG. 2, the plurality of GRIN lenses may have a plane shape. In other words, the plurality of GRIN lenses may be plane lenses without curvature. However, the plurality of GRIN lenses may not necessarily have to be fully plane, and may have curvature on at least a portion of the surface.

Although there is no particular limitation to a number of the plurality of lens sheets 120, in the description below, the plurality of lens sheets 120 will be described assuming that it includes a first lens sheet 120-1 and a second lens sheet 120-2. Each of the first lens sheet 120-1 and the second lens sheet 120-2 may be same in that both include the plurality of first lenses 10 and the plurality of second lenses 20, but the 'first lens sheet 120-1' is used as a term for specifying a lens sheet that is stacked at the upper portion of the 'second lens sheet 120-2'.

The plurality of first lenses 10 and the plurality of second lenses 20 may be alternately disposed within the plurality of lens sheets 120. In other words, the first lens sheet 120-1 and the second lens sheet 120-2 may be lens sheets in which the first lens 10 and the second lens 20 are alternately disposed. For example, as shown in FIG. 1 and FIG. 2, at left and right sides of each of the plurality of first lenses 10, the second lens 20 may be disposed, and at left and right sides of each of the plurality of second lenses 20, the first lens 10 may be disposed. If the first lens 10 are lenses at both ends of the plurality of lens sheets 120, the second lens 120 may be disposed at the left side or the right side of the first lens 10, and if the second lens are lenses at both ends of the plurality of lens sheets 120, the first lens 10 may be disposed at the left side or the right side of the second lens 20.

More specifically, the plurality of lens sheets 120 may be a lens array in which a plurality of lenses is disposed along a plurality of columns. Further, if a plurality of lenses is disposed along an n-number of columns in the plurality of lens sheets 120 (here, it is assumed that n is an even number), the first lens 10 may be disposed at a first column of the plurality of lens sheets, the second lens 20 may be disposed at a second column thereof, the first lens 10 may be disposed at a third column thereof, ..., the second lens 20 may be disposed at an n-th column thereof, or the second lens 20 may be disposed at the first column of the plurality of lens sheets, the first lens 10 may be disposed at the second column thereof, the second lens 20 may be disposed at the third column thereof, ..., and the first lens 10 may be disposed at the n-th column thereof.

Meanwhile, at least one among the first lens sheet 120-1 and the second lens sheet 120-2 may move horizontally, and specifically, a position relationship for when providing a 3-dimensional image and for when providing a 2-dimensional image may be different. Below, a position relationship of the first lens sheet 120-1 and the second lens sheet 120-2 for when providing a 3-dimensional image will be described with reference to FIG. 1 and then, a position relationship of the first lens sheet 120-1 and the second lens sheet 120-2 for when providing a 2-dimensional image will be described with reference to FIG. 2.

As shown in FIG. 1, while light for providing the 3-dimensional image is being emitted from the light emitting part 110, the plurality of first lenses 10 included in the first lens sheet 120-1 among the plurality of lens sheets 120 may be disposed at the upper portion of the plurality of first lenses 10 included in the second lens sheet 120-2 among the plurality of lens sheets 120. In other words, in order to provide the 3-dimensional image, the plurality of first lenses 10 included in the first lens sheet 120-1 may be disposed in parallel with the plurality of first lenses 10 included in the second lens sheet 120-2 in a vertical direction (i.e., top and bottom).

In addition, because the plurality of first lenses 10 and the plurality of second lenses 20 are alternately disposed within the plurality of lens sheets 120, if the plurality of first lenses 10 included in the first lens sheet 120-1 is disposed at the upper portion of the plurality of first lenses 10 included in the second lens sheet 120-2, the plurality of second lenses 20 included in the first lens sheet 120-1 may be naturally disposed at the upper portion of the plurality of second lenses 20 included in the second lens sheet 120-2.

If the plurality of first lenses 10 included in the first lens sheet 120-1 is disposed at the upper portion of the plurality of first lenses 10 included in the second lens sheet 120-2, optical power of the plurality of first lenses 10 included in the first lens sheet 120-1 and the plurality of first lenses 10 included in the second lens sheet 120-2 may be increased. For example, assuming that optical power of each of the plurality of first lenses 10 is +1 diopter (D), optical power of pairs of first lenses 10 disposed in parallel in the vertical direction may be +2. The term 'optical power' may refer to a physical measure indicating a refractive ability of an optical lens or an optical system.

If the plurality of first lenses 10 included in the first lens sheet 120-1 is disposed at the upper portion of the plurality of first lenses 10 included in the second lens sheet 120-2, the pairs of first lenses 10 disposed in parallel in the vertical direction may operate as convex lenses. Accordingly, the pairs of first lenses 10 disposed in parallel in the vertical direction may provide a 3-dimensional image by outputting light incident from the light emitting part 110 toward a pre-set direction.

Specifically, if light for providing the 3-dimensional image is emitted from the light emitting part 110, light incident from the light emitting part 110 may be refracted by the plurality of lens sheets 120, specifically, the pairs of first lenses 10 included in the plurality of lens sheets 120 and output in a first direction to provide the 3-dimensional image.

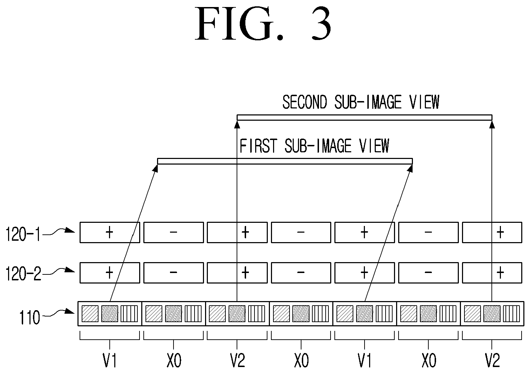

Here, the term 'first direction' may be used as a term for designating a direction for mapping a direction of each of the light being emitted through each of the plurality of pixels to one view among a plurality of views for providing the 3-dimensional image. If the direction of each of the light being emitted through each of the plurality of pixels is mapped to one view among the plurality of views for providing the 3-dimensional image, images different from one another may be provided according to a view of a user, and accordingly, a 3D effect may be provided. Each of the images that appear different from one another according to the view of the user may be referred to as a 'sub-image view' or an 'image slice'. The mapping to one view among the plurality of views to provide the 3-dimensional image will be described in greater detail with reference to FIG. 3.

Meanwhile, the plurality of first lenses 10 included in the first lens sheet 120-1 being disposed at the upper portion of the plurality of first lenses 10 included in the second lens sheet 120-2 may not only mean that the pairs of first lenses 10 disposed in parallel in the vertical direction can be used in the providing of the 3-dimensional image due to the above operating as the convex lens, but also mean that a 3-dimensional image of a wide field-of-view may be provided according to optical power of the pairs of the first lenses 10 disposed in parallel in the vertical direction increasing.

Specifically, the optical power being greater may indicate that a refractive ability of the optical lens or the optical system is strong, and focal length may be inversely proportionate to optical power. Here, the 'focal length' may mean a distance to the center of the lens when an image is gathered at one point on an optical axis of the lens. Further, the field-of-view may become wider as the focal length becomes shorter.

For example, if optical power of the plurality of first lenses 10 included in the first lens sheet 120-1 and the plurality of first lenses 10 included in the second lens sheet 120-2 is increased, the optical power of the optical system that includes the plurality of lens sheets 120 may be two folds, and the focal length may be 1/2 folds, and may be able to provide a 3-dimensional image having a wide optical field-of-view compared to when using one lens sheet.

Meanwhile, as shown in FIG. 2, while light for providing a 2-dimensional image is being emitted from the light emitting part 110, the plurality of first lenses 10 included in the first lens sheet 120-1 may be disposed at the upper portion of the plurality of second lenses 20 included in the second lens sheet 120-2. In other words, in order to provide the 2-dimensional image, the plurality of first lenses 10 included in the first lens sheet 120-1 may be disposed in parallel in the vertical direction with the plurality of second lenses 20 included in the second lens sheet 120-2.

In addition, because the plurality of first lenses 10 and the plurality of second lenses 20 are alternately disposed within the plurality of lens sheets 120, if the plurality of first lenses 10 included in the first lens sheet 120-1 is disposed at the upper portion of the plurality of second lenses 20 included in the second lens sheet 120-2, the plurality of second lenses 20 included in the first lens sheet 120-1 may be naturally disposed at the upper portion of the plurality of first lenses 10 included in the second lens sheet 120-2.

If the plurality of first lenses 10 included in the first lens sheet 120-1 is disposed at the upper portion of the plurality of second lenses 20 included in the second lens sheet 120-2, the optical power of the plurality of first lenses 10 included in the first lens sheet 120-1 and the plurality of second lenses 20 included in the second lens sheet 120-2 may be offset. Then, if the plurality of second lenses 20 included in the first lens sheet 120-1 is disposed at the upper portion of the plurality of first lenses 10 included in the second lens sheet 120-2, optical power of the plurality of second lenses 20 included in the first lens sheet and the plurality of first lenses 10 included in the second lens sheet 120-2 may also be offset.

In other words, when providing the 2-dimensional image, the optical power of the plurality of first lenses 10 included in the first lens sheet 120-1 and the second lens sheet 120-2 and a plurality of second lens sheets 120-2 may both be offset and become 0D. Accordingly, when light emitted from the light emitting part 110 passes the plurality of lens sheets 120, the light is not refracted and is passed as is and thereby, the display module 100 may be able to provide the 2-dimensional image.

Specifically, when light for providing the 2-dimensional image is emitted from the light emitting part 110, the light incident from the light emitting part 110 may pass the plurality of lens sheets 120 and may be output in the second direction to provide the 2-dimensional image. Here, the term 'second direction' may be a term for distinguishing and specifying a direction to which light incident from the light emitting part 110 is passed and output from the first direction.

According to the embodiments described above with reference to FIG. 1 and FIG. 2 above, a 2D/3D switching display module 100 capable of providing a 3-dimensional image having a wide field-of-view may be provided.

Specifically, because the plurality of lens sheets 120 according to the disclosure may be implemented with a GRIN lens with a plane shape, the above may have a thin thickness and may be easily to stack. Accordingly, compared to when a 3-dimensional image is provided using a lenticular lens according to prior art, a remarkably wide field-of-view may be provided with an efficient and effective method.

In addition, according to the disclosure, because implementing the same refraction angle for each color according to a design of the plurality of first lenses 10 and the plurality of second lenses 20 without limitation of a pitch that is accompanied when using the lenticular lens is easy, chromatic aberration may be remarkably reduced compared to prior art.

In addition, the display module 100 may provide both the 3-dimensional image and the 2-dimensional image according to a change in position relationship between the plurality of first lenses 10 operating as the convex lens and the plurality of second lenses 20 operating as the concave lens.

Further, while a lenticular lens sheet may be tilted and disposed on the light emitting part to avoid moire phenomenon which can occur when a pattern having certain intervals is repeated and overlapped when using the lenticular lens according to the prior art, because the plurality of lens sheets 120 according to the disclosure uses the GRIN lens, the refractive index of the plurality of lenses may be designed to avoid the moire phenomenon and accordingly, has an advantage of not having to tilt and dispose the plurality of lens sheets 120 on the light emitting part 110.

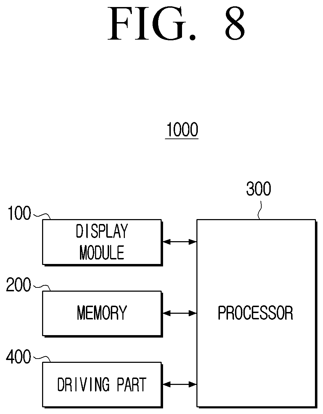

Meanwhile, as described above, because at least one among the first lens sheet 120-1 and the second lens sheet 120-2 may move horizontally and thereby, provide the 3-dimensional image or the 2-dimensional image, a method for moving at least one among the first lens sheet 120-1 and the second lens sheet 120-2 in the horizontal direction will be described with reference to FIG. 8.

FIG. 3 is a diagram illustrating one or more embodiments associated with stopping driving of pixels corresponding to the plurality of second lenses 20 of the disclosure.

As described above, while light for providing the 3-dimensional image is being emitted from the light emitting part 110, the plurality of first lenses 10 included in the first lens sheet 120-1 among the plurality of lens sheets 120 may be disposed at the upper portion of the plurality of first lenses 10 included in the second lens sheet 120-2 among the plurality of lens sheets 120. Then, when light for providing the 3-dimensional image is emitted from the light emitting part 110, light incident from the light emitting part 110 may be refracted by the pairs of first lenses 10 disposed in parallel in the vertical direction and output in the first direction to provide the 3-dimensional image.

A process for providing the 3-dimensional image by the pairs of the first lenses 10 disposed in parallel in the vertical direction will be specifically described below and then, embodiments associated with a function of the pairs of the second lenses 20 disposed in parallel in the vertical direction while the 3-dimensional image is being provided will be described.

In FIG. 3, pixels corresponding to the pairs of first lenses 10 disposed in parallel in the vertical direction have been shown as V1 and V2, and pixels corresponding to the pairs of second lenses 20 disposed in parallel in the vertical direction have been shown as X0. Here, V1 pixels may be pixels corresponding to a first sub-image view, and V2 pixels may indicate pixels corresponding to a second sub-image view. Meanwhile, arrow marks may indicate 'rays' indicating a path of progress by light. In the description of the disclosure, the term 'light' may be used as a meaning that includes rays in a broad sense.

Light emitted through the V1 pixels may be refracted as it passes the pairs of first lenses 10 disposed in parallel in the vertical direction as indicated with the arrow marks in FIG. 3, and output in a direction of a view indicated as the first sub-image view in FIG. 3. In addition, light emitted through the V2 pixels may be refracted as it passes the pairs of first lenses 10 disposed in parallel in the vertical direction as indicated with the arrow marks in FIG. 3, and output in a direction of a view indicated as the second sub-image view in FIG. 3.

As described, the direction of each of the light emitted through each of the plurality of pixels may be mapped as one view among a plurality of views for providing the 3-dimensional image, and accordingly, the pairs of first lenses 10 disposed in parallel in the vertical direction may provide image views different from one another, in other words, the 3-dimensional image according to a view of the user. Meanwhile, in FIG. 3, only the first sub-image view and the second sub-image view are merely indicated for convenience of description.

Meanwhile, because the second lens 20 operates as the concave lens, the light emitted from the light emitting part 110 may not be refracted in a pre-set direction, and accordingly, may not be used for providing the 3-dimensional image. For example, assuming that the optical power of each of the plurality of second lenses 20 is -1D, because the optical power of the pairs of the second lenses 20 disposed in parallel in the vertical direction becomes -2D, the pairs of the second lenses 20 disposed in parallel in the vertical direction are not able to collimate light emitted from the light emitting part 110 and thereby, it could lead to crosstalk according to an overlap between the images.

Accordingly, according to one or more embodiments, while light for providing the 3-dimensional image is being emitted, driving of pixels corresponding to the plurality of second lenses 20 among the plurality of pixels may be stopped. When the driving of pixels corresponding to the plurality of second lenses 20 among the plurality of pixels is stopped, the above-described problem of crosstalk may be resolved due to light not being emitted through the pairs of second lenses 20 disposed in parallel in the vertical direction.

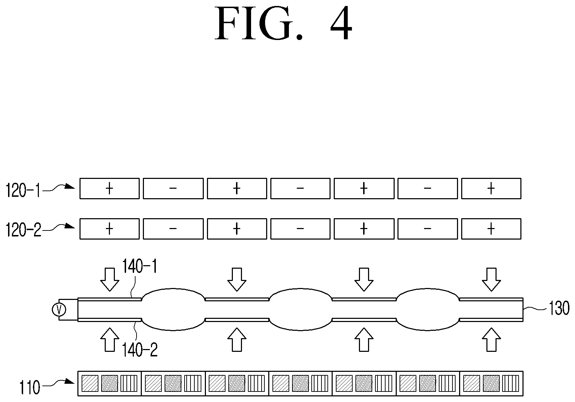

Still other one or more embodiments for resolving the above-described problem of crosstalk will be described below with reference to FIG. 4 to FIG. 6.

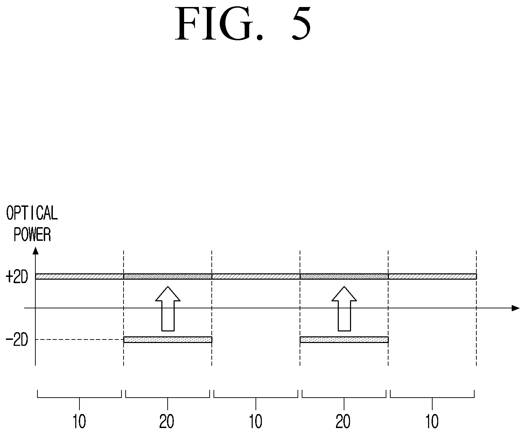

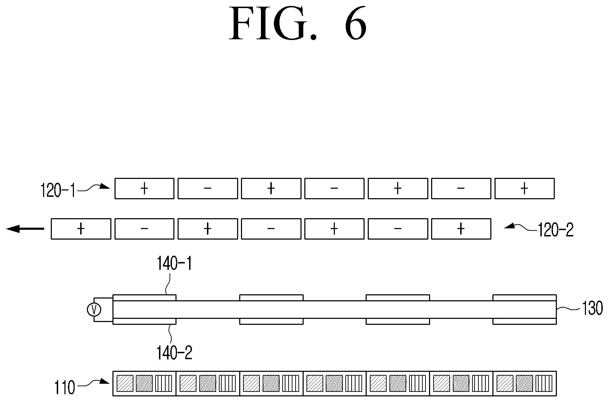

FIG. 4 is a diagram illustrating an operation of a compensation layer 130 and a plurality of electrodes when providing a 3-dimensional image, and FIG. 5 is a diagram illustrating an optical power change when a shape of the compensation layer 130 is changed. Further, FIG. 6 is a diagram illustrating an operation of the compensation layer 130 and a plurality of electrodes when providing a 2-dimensional image.

As shown in FIG. 4 and FIG. 6, the display module 100 may further include the compensation layer 130 and a plurality of electrode pairs 140-1 and 140-2.

The 'compensation layer 130' may refer to a layer for compensating crosstalk that occurs by the pixels corresponding to the plurality of second lenses 20. The compensation layer 130 may be an electroactive polymer (EAP). The EAP may refer to a polymer material capable of changing at least portion of its shape under electric excitation. The compensation layer 130 may be transparent, and may be, for example, dielectric elastomers which is a transparent EAP material. The term 'compensation layer 130' may be substituted with terms such as a 'polymer layer' or a 'flexible layer'.

Specifically, the compensation layer 130 may be disposed, as shown in FIG. 4 and FIG. 6, between the light emitting part 110 and the second lens sheet 120-2, but is not limited thereto. For example, the compensation layer may be disposed between the first lens sheet 120-1 and the second lens sheet 120-2, and may be disposed at the upper portion of the first lens sheet 120-1.

The 'plurality of electrode pairs 140-1 and 140-2' may be connected with a power part and apply voltage between the plurality of electrode pairs 140-1 and 140-2. Further, the plurality of electrode pairs 140-1 and 140-2 may be disposed in pairs at an area corresponding to a position of the plurality of first lenses 10 when light corresponding to the 3-dimensional image is being emitted through the light emitting part 110 among an area of an upper portion and lower portion of the compensation layer 130.

Referring to FIG. 4, a plurality of electrode pairs may be disposed in pairs at the upper portion and the lower portion of the compensation layer 130, and may be disposed on an area corresponding to the position of the plurality of first lenses 10 when providing the 3-dimensional image specifically. In other words, the plurality of electrode pairs 140-1 and 140-2 may be disposed in parallel vertically with the pairs of first lenses 10 disposed in parallel in the vertical direction in order to provide the 3-dimensional image. The plurality of electrode pairs 140-1 and 140-2 may be transparent, and may be, for example, an indium tin oxide (ITO) electrode which is a transparent electrode material.

In one or more embodiments, if a pre-set voltage is applied to the plurality of electrode pairs 140-1 and 140-2, an area corresponding to the position of the plurality of second lenses 20 when providing the 3-dimensional image on the compensation layer 130 may be changed (modified or adjusted) to a convex lens shape as intervals between plurality of electrode pairs 140-1 and 140-2 are narrowed.

For example, when the pre-set voltage is applied to the plurality of electrode pairs 140-1 and 140-2, as indicated by the arrows in FIG. 4, the intervals between the plurality of electrode pairs 140-1 and 140-2 may be narrowed by an attractive electrostatic interaction, and accordingly, the area corresponding to the position of the plurality of second lenses 20 when providing the 3-dimensional image, which is an area at which the plurality of electrode pairs 140-1 and 140-2 is not disposed, may be changed to the convex shape toward the upper side and the lower side as shown in FIG. 4.

Because the area changed to the convex lens shape at the compensation layer 130 can operate as the convex lens, light emitted from the light emitting part 110 may be refracted to a specific direction, and accordingly, the problem of crosstalk caused by the pairs of second lenses 20 disposed in parallel in the vertical direction when providing the 3-dimensional image may be resolved. Here, the 'specific direction' may be a direction corresponding to a plurality of views for providing the 3-dimensional image like the first direction, and may be a direction that does not correspond to all of the plurality of views for providing the 3-dimensional image.

Specifically how the shape of the convex lens is changed may be determined according to the pre-set voltage, the change in intervals between the plurality of electrode pairs 140-1 and 140-2 according thereto, and a material, size, and the like of the compensation layer 130. Specifically, if the pre-set voltage applied to the plurality of electrode pairs 140-1 and 140-2 is adjusted, curvature of the area changed to the convex lens shape, optical power, focal length, and the like may be changed.

For example, the optical power of the area changed to the convex lens shape at the compensation layer 130 may be 4 folds of the optical power of each of the plurality of first lenses 10. For example, assuming that the optical power of each of the plurality of first lenses 10 is +1D, the optical power of the pairs of the first lenses 10 disposed in parallel in the vertical direction may be +2D, and the optical power of the area changed to the convex lens shape at the compensation layer 130 may be +4D.

A vertical axis of a graph in FIG. 5 may indicate optical power, and a horizontal axis may distinguish and indicate a position of a display sheet to an area corresponding to the pairs of the first lenses 10 disposed in parallel in the vertical direction and an area corresponding to the pairs of second lenses 20 disposed in parallel in the vertical direction.

As shown in FIG. 5, although the optical power of the pairs of the first lenses 10 disposed in parallel in the vertical direction when providing the 3-dimensional image is +2D, and the optical power of the pairs of the second lenses 20 disposed in parallel in the vertical direction when providing the 3-dimensional image is -2D, because the optical power of the area changed to the convex lens shape at the compensation layer 130 is +4D, the optical power of the area corresponding to the pairs of the second lenses 20 may be +2D.

Meanwhile, when providing the 2-dimensional image, different from when providing the 3-dimensional image, voltage may not be applied to the plurality of electrode pairs 140-1 and 140-2. Then, if voltage is not applied to the plurality of electrode pairs 140-1 and 140-2, as shown in FIG. 6, the shape of the area corresponding to the position of the plurality of second lenses 20 may not be changed and a shape of a plane may be maintained.

As described above, when providing the 2-dimensional image, the optical power of the plurality of first lenses 10 and the plurality of second lens sheets 120-2 included in the first lens sheet 120-1 and the second lens sheet 120-2 may all be offset and become 0D. Further, the compensation layer 130 and the plurality of electrode pairs 140-1 and 140-2 may all be transparent, and even when the display module 100 includes the compensation layer 130, because the whole of the compensation layer 130 maintains the plane shape when providing the 2-dimensional image, when light emitted from the light emitting part 110 passes the compensation layer 130, the plurality of electrode pairs 140-1 and 140-2, and the plurality of lens sheets 120, the light is passed as is without being refracted and accordingly, the display module 100 may able to provide the 2-dimensional image.

According to the above-described embodiments with reference to FIG. 4 to FIG. 6, the display module 100 may resolve, by changing a portion of the area of the compensation layer 130 to the convex lens shape, the problem of crosstalk caused by the pairs of second lenses 20 disposed in parallel in the vertical direction when providing the 3-dimensional image. Specifically, when providing the 2-dimensional image, because the whole of the compensation layer 130 may maintain the plane shape, the above-described problem of crosstalk may be resolved while maintaining the function of the 2D/3D switching display module 100.

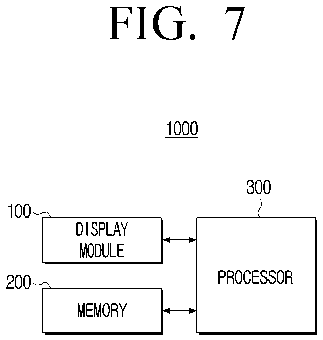

FIG. 7 is a block diagram briefly illustrating a configuration of the electronic apparatus 1000 according to one or more embodiments of the disclosure, and FIG. 8 is a block diagram illustrating in detail a configuration of the electronic apparatus 1000 according to one or more embodiments of the disclosure.

As shown in FIG. 7, the electronic apparatus 1000 according to the disclosure may include the display module 100, memory 200, and a processor 300. In addition, as shown in FIG. 8, the electronic apparatus 1000 may not only include the display module 100, the memory 200, and the processor 300, but also further include a driving part 400. However, the configurations as shown in FIG. 7 and FIG. 8 are merely examples, and in implementing the disclosure, new configurations such as a communication part, an input part, or an output part may be added in addition to the configurations as shown in FIG. 7 and FIG. 8 or a portion of the configurations may be omitted.

The display module 100 may refer to a configuration that can display an image, and specifically, refer to the 2D/3D switching display module 100 capable of providing both the 2-dimensional image and the 3-dimensional image. Because the display module 100 has been described above with reference to FIG. 1 to FIG. 6, redundant descriptions of the same content will be omitted. In other words, for even the display module 100 included in the electronic apparatus 1000, the above-described various embodiments with reference to FIG. 1 to FIG. 6 may be likewise applied.

In the memory 200, at least one instruction associated with the electronic apparatus 1000 may be stored. Further, an operating system (O/S) for driving the electronic apparatus 1000 may be stored in the memory 200. In addition, various software programs or applications for the electronic apparatus 1000 to operate according to various embodiments of the disclosure may be stored in the memory 200. Further, the memory 200 may include a semiconductor memory such as a flash memory, a magnetic storage medium such as a hard disk, or the like.

Specifically, various software modules for the electronic apparatus 1000 to operate according to various embodiments of the disclosure may be stored in the memory 200, and the processor 300 may control an operation of the electronic apparatus 1000 by executing the various software modules stored in the memory 200. In other words, the memory 200 may be accessed by the processor 300 and reading, writing, modifying, deleting, updating, and the like of data may be performed by the processor 300. Meanwhile, the term 'memory 200' in the disclosure may be used as a meaning that includes the memory 200, a ROM and RAM in the processor 300, or a memory card mounted to the electronic apparatus 1000.

Specifically, the memory 200 may be stored with various information/data such as, for example, and without limitation, image data for providing the 3-dimensional image, image data for providing the 2-dimensional image, mapping information for a direction of light for each pixel to provide the 3-dimensional image, and the like. In addition thereto, various information necessary within the scope for achieving an object of the disclosure may be stored in the memory 200, and the information stored in the memory 200 may be updated by receiving information from an external apparatus or information input by a user.

The processor 300 may control an overall operation of the electronic apparatus 1000. Specifically, the processor 300 may be connected with configurations of the electronic apparatus 1000 that includes the display module 100 and the memory 200, and by executing at least one instruction stored in the memory 200 as described above, may control the overall operation of the electronic apparatus 1000.

The processor 300 may be implemented with various methods. For example, the processor 300 may be implemented as at least one among an application specific integrated circuit (ASIC), an embedded processor, a microprocessor, a hardware control logic, a hardware finite state machine (FSM), and a digital signal processor (DSP) 300. Meanwhile, the term 'processor 300' in the disclosure may be used as a meaning that includes a central processing unit (CPU), a graphic processing unit (GPU), a main processing unit (MPU), and the like.

The processor 300 may include at least one timing controller that controls driving of the light emitting part 110 and a panel driving part 400 that control driving of the display panel.

The timing controller may control the panel driving part 400 to control the light emitting part 110. Specifically, the timing controller may adjust image data stored in the memory 200 with a signal required in the panel driving part 400, and by transmitting the adjusted signal to the panel driving part 400, have the panel driving part 400 control the driving of the light emitting part 110.

The panel driving part 400 may control the driving of the light emitting part 110 based on the signal received from the timing controller. For example, the panel driving part 400 may include a plurality of driver ICs a plurality of pixel driving circuitry. Further, the plurality of driver ICs may control, by driving the plurality of pixel driving circuitry, emission of a plurality of light emitting devices of the light emitting part 110 connected to each of the plurality of pixel driving circuitry.

Specifically, the processor 300 may control the display module 100 to provide the 3-dimensional image or the 2-dimensional image. Specifically, the processor 300 may implement, when providing the 3-dimensional image or the 2-dimensional image, the 2-dimensional/3-dimensional switching display by controlling the light emitting part 110, the driving part 400, the plurality of electrode pairs 140-1 and 140-2, and the like with methods different from one another. A process for controlling the processor 300 when providing the 3-dimensional image or the 2-dimensional image will be described after the description about the driving part 400.

The driving part 400 may move at least one among the plurality of lens sheets 120 in the horizontal direction. The driving part 400 may include at least one motor and at least one gear, and the at least one motor and the at least one gear may be connected to the plurality of lens sheets 120. In addition, the driving part 400 may include at least one among a piezo actuator, an ultrasonic motor (USM), and a shape memory actuator (SMA).

Specifically, the driving part 400 may move the first lens sheet 120-1 and/or the second lens sheet 120-2 among the plurality of lens sheets 120 in the horizontal direction in order to provide the 3-dimensional image and/or to provide the 2-dimensional image.

Meanwhile, while light for providing the 2-dimensional image is being emitted from the light emitting part 110, the driving part 400 may adjust the position relationship of the plurality of first lenses 10 and the plurality of second lenses 20 as shown in FIG. 2 by moving the second lens sheet 120-2 among the first lens sheet 120-1 and the second lens sheet 120-2 in the horizontal direction. In other words, the driving part 400 may move the second lens sheet 120-2 for the plurality of first lenses 10 included in the first lens sheet 120-1 to be disposed at the upper portion of the plurality of second lenses 20 included in the second lens sheet 120-2, and for the plurality of second lenses 20 included in the first lens sheet 120-1 to be disposed at the upper portion of the plurality of first lenses 10 included in the second lens sheet 120-2.

Conversely, while light for providing the 3-dimensional image is being emitted from the light emitting part 110, the driving part 400 may not move the plurality of lens sheets 120 in the horizontal direction. Accordingly, the plurality of first lenses 10 and second lenses 20 included in the display module 100 may be disposed as shown in FIG. 1 and provide the 3-dimensional image.

In the above, only an example of moving the second lens sheet 120-2 among the plurality of lens sheets 120 in the horizontal direction for only when providing the 2-dimensional image has been described, but the disclosure is not limited thereto. In other words, when providing the 3-dimensional image, the first lenses 10 may be disposed in parallel in the vertical direction among one another, and when providing the 2-dimensional image, any method may be applied in the disclosure so long as it is a method that can dispose the plurality of first lenses 10 and second lenses 20 in parallel in the vertical direction.

Meanwhile, in the above, an embodiment for automatically moving at least one among the plurality of lens sheets 120 in the horizontal direction using the driving part 400 has been described, but it is also possible for the user to manually move the at least one among the plurality of lens sheets 120 in the horizontal direction according to an embodiment.

A control process of the processor 300 for when providing the 3-dimensional image or the 2-dimensional image will be described below.

The processor 300 may receive a request for providing an image. The 'request for providing an image' may be received based on a user input, received from an external apparatus, or received based on an occurrence of a pre-defined event that provision of the image is necessary.

For example, the request for providing the image may be received based on a touch input of the user for selecting an image that is subject to playback, a control signal received from a remote control device, and the like. In addition, the request for providing the image may be received based on events such as turning-on of power of the electronic apparatus 1000 included with the display module 100 and unlocking of the electronic apparatus 1000 occurring in the electronic apparatus 1000.

Meanwhile, 'receiving' of the request for providing the image may be substituted with terms such as, for example, and without limitation, 'obtaining (acquiring)', 'identifying', 'recognizing', 'detecting', and the like of the request for providing the image.

When the request for providing the image is received, the processor 300 may identify whether the request for providing the image is a request for providing the image in 3-dimensions, or whether the request is a request for providing the image in 2-dimensions. In other words, the processor 300 may analyze whether the request for providing the image is a request for providing the image in 3-dimensions, or whether the request is a request for providing the image in 2-dimensions, and distinguish a type of the request for providing the image based on the analyzed result. In addition, the processor 300 may obtain information about whether the request for providing the image is a request for providing the image in 3-dimensions, or whether the request is a request for providing the image in 2-dimensions.

Meanwhile, information about whether the request for providing the image is a request for providing the 3-dimensional image, or whether the request is a request for providing the 2-dimensional image may be transmitted by being synchronized by the light emitting part 110, the driving part 400, and the plurality of electrode pairs 140-1 and 140-2.

If the request for providing the image in 3-dimensions is received, the processor 300 may control the driving part 400 for the plurality of first lenses 10 included in the first lens sheet 120-1 to be disposed at the upper portion of the plurality of first lenses 10 included in the second lens sheet 120-2. Because the control of the driving part 400 has been described above, redundant descriptions of the same content will be omitted.

In addition, if the request for providing the image in 3-dimensions is received, the processor 300 may control the light emitting part 110 to emit light corresponding to the 3-dimensional image. Specifically, the processor 300 may transmit a control signal for light corresponding to the 3-dimensional image to be emitted to the light emitting part 110. When the control signal is received from the processor 300, the light emitting part 110 may emit light corresponding to the 3-dimensional image based on 3-dimensional image data that corresponds to the request for providing the image and is stored in the memory 200.

Here, '3-dimensional image data' may further include, unlike '2-dimensional image data' which will be described below, not only color information for each pixel according to horizontal/vertical coordinates on the plane, but also position and color information on a 3-dimensional space according to depth coordinates.

If the request for providing the image in 2-dimensions is received, the processor 300 may control the driving part 400 for the plurality of first lenses 10 included in the first lens sheet 120-1 to be disposed at the upper portion of the plurality of second lenses 20 included in the second lens sheet 120-2.

In addition, when the request for providing the image in 2-dimensions is received, the light emitting part 110 may be controlled to emit light corresponding to the 2-dimensional image. Specifically, if the request for providing the image is a request for providing the image in 2-dimensions, the processor 300 may transmit a control signal for light corresponding to the 2-dimensional image to be emitted to the light emitting part 110. When the control signal is received from the processor 300, the light emitting part 110 may emit light corresponding to the 2-dimensional image based on 2-dimensional image data that corresponds to the request for providing the image and is stored in the memory 200.

Meanwhile, if the display module 100 further includes the compensation layer 130 and the plurality of electrode pairs 140-1 and 140-2, the processor 300 may control the plurality of electrode pairs 140-1 and 140-2 according to whether the request for providing the image is a request for providing the image in 3-dimensions, or whether the request is for providing the image in 2-dimensions.

Specifically, when the request for providing the image in 3-dimensions is received, the processor 300 may control the plurality of electrode pairs 140-1 and 140-2 for the pre-set voltage to be applied to the plurality of electrode pairs 140-1 and 140-2. Then, as described above, when the pre-set voltage is applied to the plurality of electrode pairs 140-1 and 140-2, as the intervals between the plurality of electrode pairs 140-1 and 140-2 is narrowed as shown in FIG. 4, the area corresponding to the position of the plurality of second lenses 20 when the 3-dimensional image is provided at the compensation layer 130 may be changed to the convex lens shape.

Meanwhile, when the request for providing the image in 2-dimensions is received, the processor 300 may control the plurality of electrode pairs 140-1 and 140-2 for the pre-set voltage to not be applied to the plurality of electrode pairs 140-1 and 140-2. If voltage is not applied to the plurality of electrode pairs 140-1 and 140-2, as shown in FIG. 6, the shape of the area corresponding to the position of the plurality of second lenses 20 may not be changed and the plane shape may be maintained.

In addition thereto, at least a portion among the various embodiments described above with reference to FIG. 1 to FIG. 6 may be implemented by control of the processor 300.

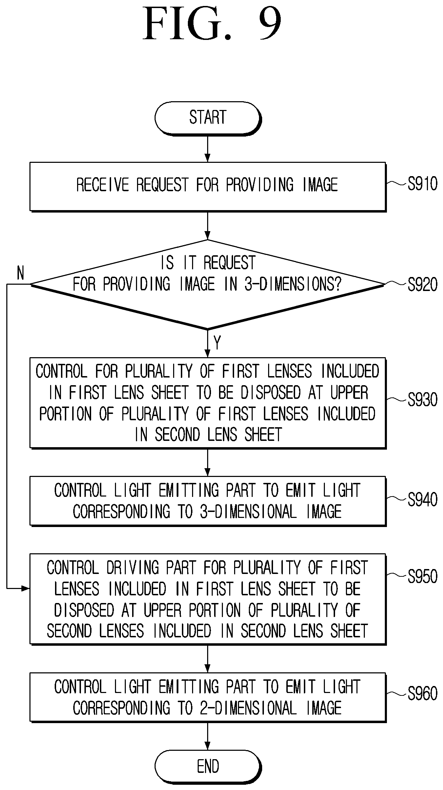

FIG. 9 is a flowchart illustrating a control method of the electronic apparatus 1000 according to one or more embodiments of the disclosure.

As shown in FIG. 9, the electronic apparatus 1000 may receive a request for providing an image (S910). The 'request for providing the image' may be received based on a user input, received from an external apparatus, and received based on an occurrence of a pre-defined event that provision of the image is necessary.

The electronic apparatus 1000 may identify whether the request for providing the image is a request for providing the image in 3-dimensions (S920). Specifically, when the request for providing the image is received, the electronic apparatus 1000 may identify whether the request for providing the image is a request for providing the image in 3-dimensions, or whether it is a request for providing the image in 2-dimensions. Information about whether the request for providing the image is a request for providing the 3-dimensional image, is a request for providing the 2-dimensional image may be synchronized and transmitted by the light emitting part 110 and the driving part 400.

If the request for providing the image is a request for providing the image in 3-dimensions, the electronic apparatus 1000 may control for the plurality of first lenses 10 included in the first lens sheet 120-1 to be disposed at the upper portion of the plurality of first lenses 10 included in the second lens sheet 120-2 (S930). Then, the electronic apparatus 1000 may control the light emitting part 110 to emit light corresponding to the 3-dimensional image (S940). Accordingly, the pairs of first lenses 10 disposed in parallel in the vertical direction may provide the 3-dimensional image by outputting the light incident from the light emitting part 110 in the pre-set direction.

If the request for providing the image is a request for providing the image in 2-dimensions, the electronic apparatus 1000 may control the driving part 400 for the plurality of first lenses 10 included in the first lens sheet 120-1 to be disposed at the upper portion of the plurality of second lenses 20 included in the second lens sheet 120-2 (S950). Then, the electronic apparatus 1000 may control the light emitting part 110 to emit light corresponding to the 2-dimensional image (S960). Accordingly, the light incident from the light emitting part 110 may pass the plurality of lens sheets 120 and be output in the second direction to provide the 2-dimensional image.

Meanwhile, a control method of the electronic apparatus 1000 according to the above-described embodiment may be implemented with a program and provided in the electronic apparatus 1000. Specifically, a program that includes the control method of the electronic apparatus 1000 may be stored and provided in a non-transitory readable media.

Specifically, in terms of a non-transitory computer readable recording medium that includes a program for executing a control method of the electronic apparatus 1000, the control method of the electronic apparatus 1000 may include receiving a request for providing an image, identifying whether the request for providing the image is a request for providing the image in 3-dimensions, controlling, based on the request for providing the image being a request for providing the image in 3-dimensions, the plurality of first lenses 10 included in the first lens sheet 120-1 to be disposed at the upper portion of the plurality of first lenses 10 included in the second lens sheet 120-2, and controlling the light emitting part 110 to emit light corresponding to the 3-dimensional image, and controlling, based on the request for providing the image being a request for providing the image in 2-dimensions, the driving part 400 for the plurality of first lenses 10 included in the first lens sheet 120-1 to be disposed at the upper portion of the plurality of second lenses 20 included in the second lens sheet 120-2, and controlling the light emitting part 110 to emit light corresponding to the 2-dimensional image.

In the above, the control method of the electronic apparatus 1000, and the computer-readable recording medium that includes the program for executing the control method of the electronic apparatus 1000 has been briefly described, but this is merely to omit redundant descriptions thereof, and various embodiments relating to the electronic apparatus 1000 may also be applied to the control method of the electronic apparatus 100, and to the computer-readable recording medium that includes the program for executing the control method of the electronic apparatus 1000.

A machine-readable storage medium may be provided in a form of a non-transitory storage medium. Here, the 'non-transitory storage medium' may mean that the apparatus is tangible and does not include a signal, and the term does not distinguish data being store semi-permanently in the storage medium and being stored temporarily. For example, the 'non-transitory storage medium' may include a buffer in which data is temporarily stored.

According to an embodiment, a method according to the various embodiments described in the disclosure may be provided included a computer program product. The computer program product may be exchanged between a seller and a purchaser as a commodity. The computer program product may be distributed in a form of a machine-readable storage medium, or distributed online through an application store or directly between two user devices. In the case of online distribution, at least a portion of the computer program product may be stored at least temporarily in the machine-readable storage medium such as a server of a manufacturer, a server of an application store, or the memory 200 of a relay server, or temporarily generated.

Each of the elements according to the various embodiments of the disclosure as described above may be formed as a single entity or a plurality of entities, and a portion of sub-elements of the above-mentioned sub-elements may be omitted, or other sub-elements may be further included in the various embodiments. Alternatively or additionally, a portion of the elements may be integrated into one entity to perform the same or similar functions performed by the respective relevant elements prior to integration.

Operations performed by a module, a program, or another element, in accordance with various embodiments, may be executed sequentially, in a parallel, repetitively, or in a heuristic manner, or at least a portion of the operations may be executed in a different order, omitted or a different operation may be added.

Meanwhile, the term "part" or "module" used in the disclosure may include a unit formed of a hardware, software, or firmware, and may be used interchangeably with terms such as, for example, and without limitation, logic, logic blocks, components, circuits, or the like. "Part" or "module" may be a component integrally formed or a minimum unit or a part of the component performing one or more functions. For example, a module may be formed as an application-specific integrated circuit (ASIC).

The various embodiments of the disclosure may include a machine-readable storage media.

When the instruction is executed by the processor 300, the processor 300 may directly or using other elements under the control of the processor 300 perform a function corresponding to the instruction. The instruction may include a code generated by a compiler or executed by an interpreter.

While the disclosure has been illustrated and described above with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. A display module, comprising:
a light emitting part that emits light corresponding to image data through a plurality of pixels; and
a plurality of lens sheets comprising a plurality of gradient-index (GRIN) lenses, respectively, that operate as a convex lens or a concave lens based on different refractive indices according to a position in a lens,
wherein the plurality of GRIN lenses comprises a plurality of first lenses operating as a convex lens and a plurality of second lenses operating as a concave lens, respectively,
wherein the plurality of first lenses and the plurality of second lenses are alternately disposed within the plurality of lens sheets, and
wherein the plurality of first lenses comprised in a first lens sheet among the plurality of lens sheets is disposed at an upper portion of the plurality of first lenses comprised in a second lens sheet among the plurality of lens sheets while light for providing a 3-dimensional image is being emitted from the light emitting part.

2. The display module of claim 1,
wherein the plurality of first lenses comprised in the first lens sheet is disposed at an upper portion of the plurality of second lenses comprised in the second lens sheet while light for providing a 2-dimensional image is being emitted from the light emitting part.

3. The display module of claim 1,
wherein the plurality of GRIN lenses have a plane shape, and
wherein the first lens sheet is stacked at an upper portion of the second lens sheet.

4. The display module of claim 1,
wherein the plurality of second lenses comprised in the first lens sheet is disposed at an upper portion of the plurality of second lenses comprised in the second lens sheet, and driving of pixels corresponding to the plurality of second lenses among the plurality of pixels is stopped.

5. The display module of claim 1, further comprising:
a compensation layer; and
a plurality of electrode pairs disposed in pairs at an area corresponding to a position of a plurality of first lenses when light corresponding to a 3-dimensional image is emitted through the light emitting part among an area of an upper portion and a lower portion of the compensation layer,
wherein an area corresponding to a position of the plurality of second lenses in the compensation layer is changed to a convex lens shape as intervals between the plurality of electrode pairs are narrowed when a pre-set voltage is applied to the plurality of electrode pairs.

6. The display module of claim 5,
wherein the compensation layer is an electroactive polymer (EAP), and
the compensation layer and the plurality of electrode pairs are transparent.

7. The display module of claim 5,
wherein optical power of the area changed to the convex lens shape is 4 times of optical power of each of the plurality of first lenses.

8. An electronic apparatus, comprising:
a display module;
memory storing at least one instruction; and
a processor configured to execute the at least one instruction,
wherein the display module comprises:
a light emitting part that emits light corresponding to image data through a plurality of pixels; and
a plurality of lens sheets comprising a plurality of gradient-index (GRIN) lenses, respectively, that operate as a convex lens or a concave lens based on different refractive indices according to a position in a lens,
wherein the plurality of GRIN lenses comprises a plurality of first lenses operating as a convex lens and a plurality of second lenses operating as a concave lens, respectively,
wherein the plurality of first lenses and the plurality of second lenses are alternately disposed within the plurality of lens sheets, and
wherein the plurality of first lenses comprised in a first lens sheet among the plurality of lens sheets is disposed at an upper portion of the plurality of first lenses comprised in a second lens sheet among the plurality of lens sheets while light for providing a 3-dimensional image is being emitted from the light emitting part.

9. The electronic apparatus of claim 8, further comprising:
a driving part that moves at least one among the plurality of lens sheets to a horizontal direction,
wherein the processor is configured to
control, based on a request for providing an image in 3-dimensions being received, the driving part for the plurality of first lenses comprised in the first lens sheet to be disposed at an upper portion of the plurality of first lenses comprised in the second lens sheet, and control the light emitting part for light corresponding to a 3-dimensional image to be emitted, and
control, based on a request for providing an image in 2-dimensions being received, the driving part for the plurality of first lenses comprised in the first lens sheet to be disposed at an upper portion of the plurality of second lenses comprised in the second lens sheet, and control the light emitting part for light corresponding to a 2-dimensional image to be emitted.

10. The electronic apparatus of claim 9,
wherein the driving part comprises at least one among a piezo actuator, an ultrasonic motor (USM), and a shape memory actuator (SMA).

11. The electronic apparatus of claim 8,
wherein the plurality of first lenses comprised in the first lens sheet is disposed at an upper portion of the plurality of second lenses comprised in the second lens sheet while light for providing a 2-dimensional image is being emitted from the light emitting part.

12. The electronic apparatus of claim 8,
wherein the plurality of GRIN lenses have a plane shape, and
wherein the first lens sheet is stacked at an upper portion of the second lens sheet.

13. The electronic apparatus of claim 8,
wherein the plurality of second lenses comprised in the first lens sheet is disposed at an upper portion of the plurality of second lenses comprised in the second lens sheet, and driving of pixels corresponding to the plurality of second lenses among the plurality of pixels is stopped.

14. The electronic apparatus of claim 8,
wherein the display module further comprises:
a compensation layer; and
a plurality of electrode pairs disposed in pairs at an area corresponding to a position of a plurality of first lenses when light corresponding to a 3-dimensional image is emitted through the light emitting part among an area of an upper portion and a lower portion of the compensation layer,
wherein the processor is configured to control the plurality of electrode pairs for a pre-set voltage to be applied to the plurality of electrode pairs when a request for providing an image in 3-dimensions is received, and
wherein an area corresponding to a position of the plurality of second lenses in the compensation layer is changed to a convex lens shape as intervals between the plurality of electrode pairs are narrowed when a pre-set voltage is applied to the plurality of electrode pairs.

15. The electronic apparatus of claim 14,
wherein the compensation layer is an electroactive polymer (EAP), and
the compensation layer and the plurality of electrode pairs are transparent.
